# FASCICULE DE BREVET EUROPEEN

(11) **EP 1 649 363 B1**
(45) Date de publication et mention de la délivrance du brevet: **12.06.2019**
(21) Numéro de dépôt: 04767651.5
(22) Date de dépôt: 09.07.2004
(51) Int. Cl.: G06F 8/20

(54) **PROCEDE DE GESTION DES COMPOSANTS LOGICIELS INTEGRES DANS UN SYSTEME EMBARQUE**
VERFAHREN ZUR VERWALTUNG VON SOFTWARE-KOMPONENTEN, DIE IN EIN EINGEBETTETES SYSTEM INTEGRIERT SIND
METHOD OF MANAGING SOFTWARE COMPONENTS THAT ARE INTEGRATED INTO AN EMBEDDED SYSTEM

(30) Priorité: 10.07.2003 FR 0308489; 26.03.2004 FR 0403174
(43) Date de publication de la demande: 26.04.2006
(73) Titulaire: Alcatel Lucent, 91620 Nozay (FR)
(72) Inventeur: BAISSUS, Eric, F-06650 Le Rouret (FR); LAMY-CHARRIER, David, F-06370 Mouans Sartoux (FR)
(74) Mandataire: Browne, Robin Forsythe
(86) Numéro de dépôt international: PCT/FR2004/001820
(87) Numéro de publication internationale: WO 2005/008509

(56) Documents cités:
- EP-A- 0 940 747
- US-A- 6 108 420
- US-B1- 6 259 958
- "DYNAMIC LOADING USING AN EXTENDED ROUTER LINKAGE MECHANISM" IBM TECHNICAL DISCLOSURE BULLETIN, IBM CORP. NEW YORK, US, vol. 30, no. 9, 1 février 1988 (1988-02-01), pages 373-374, XP000022398 ISSN: 0018-8689
- GAMMA & AL.: "Design Pattern" 1995, ADDISON WESLEY , XP002296822 page 185 - page 193

## Description

La présente invention se rapporte au domaine des composants logiciels dans les systèmes embarqués, notamment dans les téléphones mobiles.

La présente invention se rapporte plus particulièrement à un procédé de gestion des composants, incluant les appels et les dialogues inter-composant.

La complexité du logiciel résidant dans des systèmes embarqués tels que les téléphones portables, les appareils de photographie ou les systèmes de navigation pour automobile a incroyablement augmenté durant la dernière décennie, pour atteindre des niveaux comparables à ceux atteints dans des appareils de type ordinateur personnel PC. L'industrie, en particulier celle de la téléphonie mobile, se trouve confrontée au challenge de rapidement développer de nouveaux appareils, intégrant un très grand nombre de fonctionnalités sur une myriade de plateformes très diverses. Associés à cette croissance de la complexité, les systèmes embarqués doivent aujourd'hui répondre à un cahier de charge réunissant à la fois des contraintes de flexibilité, d'ouverture (via téléchargement ou par ajout d'accessoires ou de carte mémoires), de coût, de rapidité de développement, et de robustesse voire de sécurité. Ces contraintes se retrouvent tout particulièrement au niveau du logiciel de tels systèmes.

A la vue de ces contraintes, il apparaît clairement que le challenge auquel se trouve confrontée l'industrie vis-à-vis du software n'est plus lié essentiellement à une problématique de développement (de tel ou tel logiciel ayant une fonctionnalité donnée plus ou moins complexe à implémenter), mais plutôt à une problématique d'intégration et de validation (de bouts logiciels de provenances diverses), comme cela est le cas pour l'industrie du hardware depuis une décennie. Le but de la présente invention est de faciliter la tâche d'intégration et de validation de systèmes embarqués logiciels complexes grâce à une technologie qui permet d'isoler les bouts logiciels en les transformant en composants indépendants, tout en conservant au niveau du système des performances équivalent aux technologies usitées à ce jour. Et ce, tout en ouvrant le système ainsi constitué à des ajouts ou corrections une fois les appareils commercialisés.

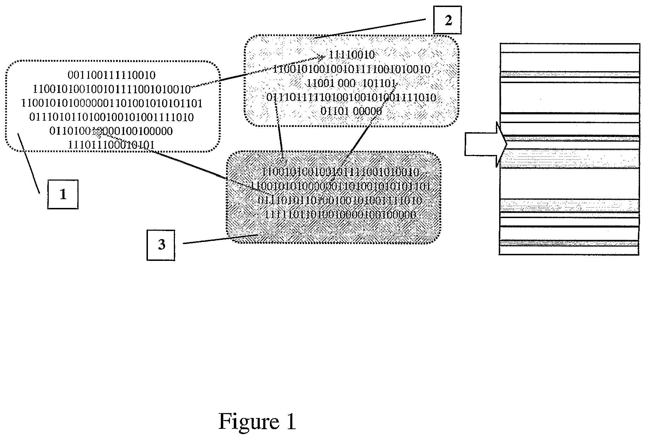

Selon l'art antérieur, les logiciels embarqués sont traditionnellement développés sous forme de couches logicielles, couches ayant éventuellement dans le cas des systèmes les plus évolués des privilèges d'accès au processeur ou à des ressources spécifiques du système. La communication intra- et inter-couche se fait de manière procédurale (appel de fonction). Quant à l'image finale du logiciel, elle est réalisée suite à une phase de compilation bout par bout et de 'linkage' de l'ensemble, comme illustré sur la figure 1, où 3 codes sont référencés 1, 2 et 3, et où l'image finale est obtenue après édition de liens ('linkage') des codes 1, 2, et 3 une fois en mémoire, prêts à l'exécution par le processeur.

Ce type de développement a l'avantage de créer des systèmes très efficaces en termes d'utilisation des ressources et de rapidité. En revanche, ils cumulent un certain nombre de problèmes, problèmes devenant de plus en plus difficiles à gérer avec une complexité croissante du système. On peut citer en particulier les problèmes de test, de développement par parties distinctes, de portage sur d'autres plateformes, de mise à jour, de stabilité, de flexibilité ...

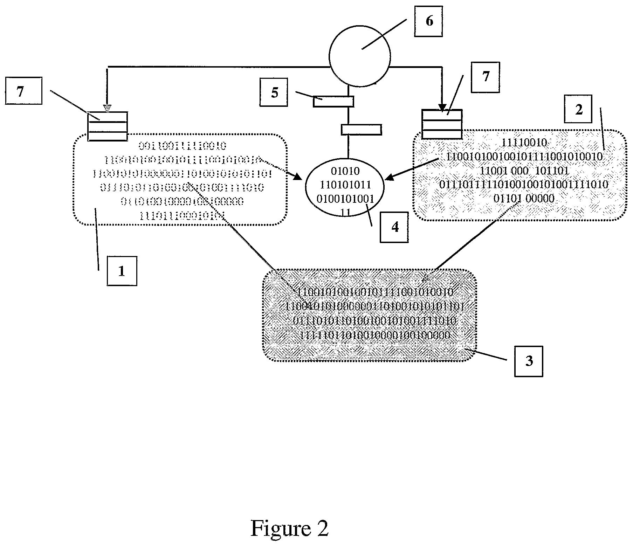

Également selon l'art antérieur, afin de palier ces problèmes, la plupart des acteurs du monde de l'embarqué ont adopté une approche plus proche de l'approche dite 'composant', développée pour des systèmes beaucoup plus gros et complexes (en particulier au niveau des serveurs) à des plateformes beaucoup plus vétustes. Cela a été fait en remplaçant, lorsque cela était possible, les appels procéduraux par des échanges de messages via le système d'exploitation (OS pour « operating system » par la suite), comme illustré figure 2, où 3 codes sont référencés 1, 2 et 3, et où les boîtes aux lettres 7 reçoivent les messages 5 envoyés par les différents codes en utilisant le router 6 et sont gérées par l'OS. Cela permet de bien mieux séparer, et de manière contrôlée, les échanges entre entités logicielles. En revanche, du fait de la lourdeur d'un tel mécanisme (en termes de développement et de demande en ressources), ce mécanisme n'est utilisé que partiellement, les appels procéduraux restant monnaie courante dans de tels systèmes, limitant ainsi l'intérêt de l'approche puisque la plupart des désavantages cités préalablement perdurent.

L'art antérieur connaît également, dans le domaine des composants embarqués, par la demande de brevet PCT WO 03/009137, un procédé pour intégrer des composants logiciels pour les systèmes embarqués. Les modules y sont instanciés de manière indépendante grâce à un « manager » s'assurant qu'un module a bien tous les autres modules dont il a besoin avant de lancer une exécution.

Document D1(XP000022398) se rapporte à une implémentation d'un routeur dynamique où une extension d'un mécanisme de liaison du routeur est décrite en utilisant une table de liaison . Il est également décrit comment la table de liaison peut être utilisée pour passer le contrôle à une fonction du routeur, c'est-à-dire l'étape suivant la génération de la table de liaison.

En outre, le document D2 (US6259958) concerne un mécanisme d'appel pour fonctions de liaison statique et dynamique à l'intérieur d'un contrôleur orienté objet . Dans un système de commande numérique informatisé, ledit mécanisme et son procédé permettent à des objets d'application de liaison dynamique et des objets d'application de liaison statique, créés à l'aide de boîtes à outils de développements hétérogènes, d'interagir avec le noyau et entre eux. Dans un mode de réalisation, le mécanisme d'appel comprend : une interface de liaison dynamique qui n'utilise que des appels logiciels nominatifs pour permettre l'interaction d'objets d'application de liaison dynamique avec le noyau ; une interface de liaison statique qui utilise au moins un appel logiciel non normatif pour permettre l'interaction d'objets de liaison statique avec le noyau et au moins un routeur d'appels qui gère les appels logiciels entre le noyau, les objets d'application de liaison dynamique et les objets d'application de liaison statique, qui détecte les types d'appel logiciel et achemine les appels logiciels vers une interface de liaison dynamique ou une interface de liaison statique en fonction, du type d'appel logiciel.

Cependant, cette demande ne mentionne pas de communication efficace entre les composants, afin de mieux utiliser les ressources.

La présente invention entend remédier aux inconvénients de l'art antérieur en mettant en place une manière de communiquer entre les entités logicielles tout aussi performante que les appels procéduraux tout en permettant à ces entités d'agir comme des composants logiciels complètement indépendants.

Pour ce faire, la présente invention est du type décrit ci-dessus et elle est remarquable, dans son acception la plus large, en ce qu'elle concerne un procédé de gestion d'un système embarqué comprenant :
- au moins un code originel associé à un équipement informatique,
- au moins un code embarqué associé audit système embarqué,
- au moins un processeur associé audit système embarqué,
caractérisé en ce qu'il comprend les étapes consistant à :
- la création d'au moins un composant logiciel autonome consistant :
   - à analyser ledit code originel pour identifier les fonctions cibles appelées par ledit code originel et non implémentées dans ledit code originel, et
   - à déterminer pour chacune desdites fonctions non implémentées un identifiant de fonction correspondant
   - à remplacer les appels desdites fonctions non implémentées par l'appel d'au moins une fonction d'aiguillage PLUG implémentée par ledit code embarqué,
   - à stocker l'identifiant de chaque fonction non implémentée dans le processeur associé au système embarqué,
- l'exécution dudit composant sur le système embarqué, ladite fonction d'aiguillage PLUG commandant la redirection du processeur vers l'adresse de la fonction cible non implémentée correspondant audit identifiant de fonction.

De préférence, il comprend les étapes suivantes supplémentaires :
- à la création du composant logiciel autonome:
   - à analyser ledit code originel pour identifier les fonctions cibles appelées ayant comme paramètre l'adresse d'une fonction originelle définie dans le composant, et
   - à remplacer ce dit paramètre de call-back par l'appel d'une fonction spécifique,
   - à générer automatiquement ladite fonction spécifique associée, fonction fournissant un identifiant de ladite fonction originelle et appelant au moins une fonction d'aiguillage PLUG implémentée par ledit code embarqué.

De préférence, il comprend les étapes suivantes supplémentaires :
- à la création du composant logiciel autonome:
   - à analyser ledit code originel pour identifier toute information non définie dans le code originel et dont le composant à besoin afin de pouvoir être exécuté.
   - à ajouter la liste de ces informations manquantes dans ledit composant lors de sa génération.
- à l'exécution dudit composant, à modifier le code du dudit composant une fois que les informations initialement manquantes peuvent être fournies par le système, ce afin de rendre le composant exécutable sur ledit système embarqué.

Avantageusement, composant réside sur ledit système embarqué.

De préférence, ledit composant est téléchargé par ledit code embarqué.

Avantageusement, ledit composant est sous forme cryptée au moment de sa création.

Dans ce cas, le procédé comprend en outre une étape de décryptage dudit composant.

Avantageusement, ledit composant est remplacé par un autre composant remplissant la même fonction.

De préférence, ledit composant est placé à l'exécution dans une zone mémoire du système embarqué différente de la zone mémoire dans laquelle il se trouvait initialement ladite zone mémoire d'exécution.

Avantageusement, ladite zone mémoire d'exécution est accessible par ledit processeur et possède des propriétés spécifiques en termes de vitesse d'exécution, de consommation et d'accessibilité en termes de droits d'accès.

Avantageusement, les identifiants de fonctions cibles non implémentées constituent des paramètres de la fonction d'aiguillage PLUG.

Avantageusement, il ne comporte aucune opération de copie des paramètres de la fonction cibles non implémentées.

De préférence, l'identifiant de la fonction non implémentée est stocké dans une pile du processeur avant l'appel de la fonction d'aiguillage PLUG, l'identifiant ainsi stocké étant ensuite utilisé par ladite fonction d'aiguillage pour réaliser la commande de la redirection vers la fonction correspondant audit identifiant.

De préférence, l'identifiant de la fonction non implémentée est stocké dans un registre du processeur avant l'appel de la fonction d'aiguillage PLUG, l'identifiant ainsi stocké étant ensuite utilisé par ladite fonction d'aiguillage pour réaliser la commande de la redirection vers la fonction correspondant audit identifiant.

Selon un mode de mise en oeuvre, les fonctions cibles sont implémentées sur un autre processeur de l'équipement embarqué

Selon un autre mode de mise en oeuvre, les fonctions cibles sont implémentées sur une autre ressource informatique, autre que ledit système embarqué.

Par ailleurs, lesdits identifiants de fonction cible comportent une première information correspondant au composant logiciel implémentant ladite fonction cible et une deuxième information correspondant au numéro de la fonction cible dans ledit composant.

Préférentiellement, la fonction d'aiguillage PLUG est réalisée à, partir d'au moins une table de correspondance entre l'identifiant de fonction cible, et l'adresse de la fonction cible.

En outre, ladite table de correspondance est subdivisée en une première table de correspondance entre ladite information correspondant au composant logiciel et le composant implémentant ladite fonction cible, et, pour chacun desdits composants, une deuxième table de correspondance entre ledit numéro de la fonction et l'adresse de ladite fonction cible dans le composant correspondant.

De préférence, lesdites deuxièmes tables sont générées lors de la création du composant.

Avantageusement, lesdites deuxièmes tables sont enregistrées en mémoire morte.

De préférence, caractérisé en ce que ladite première table est enregistrée en mémoire vive.

De préférence, ledit composant inclut au moins une information permettant de spécifier les fonctionnalités réalisées par ledit composant (nom du composant, version, les listes des fonctions implémentées par le composant ...) .

De plus, le système embarqué apte à fournir la liste des composants disponibles sur ledit système embarqué ainsi que les informations composants associées à une autre ressource informatique en ayant fait la demande au préalable.

L'invention concerne également un système non-embarqué simulant un système embarqué comportant :
- au moins un code originel associé à un équipement informatique,
- au moins un code embarqué associé au système non-embarqué,
- au moins un processeur associé au système non-embarqué, et
- au moins un moteur, caractérisé en ce que ledit moteur réalise les étapes du procédé.

L'invention se rapporte également à un système embarqué comportant au moins un moteur, caractérisé en ce que les composants inclus dans les mémoires sont obtenus conformément au procédé.

On comprendra mieux l'invention à l'aide de la description, faite ci-après à titre purement explicatif, d'un mode de réalisation de l'invention, en référence aux figures annexées :
- la figure 1 illustre un mode de gestion de différents codes selon l'art antérieur et un principe de linkage ;
- la figure 2 illustre un mode de gestion de différents codes selon l'art antérieur et un système de messages ;
- la figure 3 illustre le mode de gestion des composants selon l'invention ;
- la figure 4 illustre une vue générale de la structure d'un composant selon l'invention ;
- la figure 5 illustre les états principaux des composants selon l'invention ;
- la figure 6 illustre l'architecture du moteur selon l'invention ;
- la figure 7 illustre le principe de redirection grâce au PROXY ou PLUG.

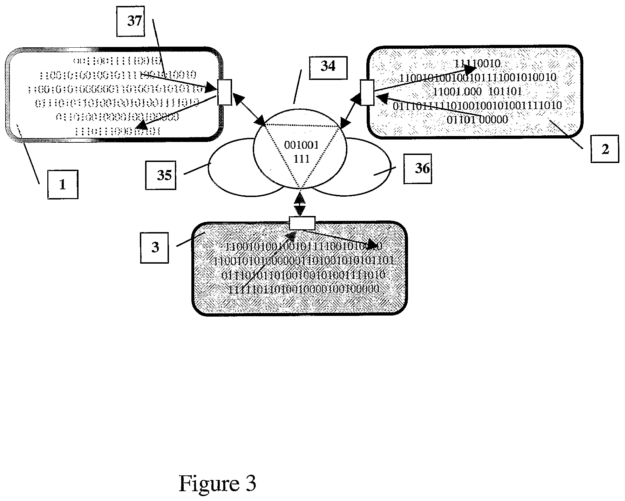

Selon l'invention, illustré figure 3, les 3 codes 1, 2 et 3 peuvent être gérés de façon tout à fait nouvelle, grâce aux éléments référencés sur la figure :
34 : Entité en charge de l'aiguillage et du contrôle des différentes communications (PLUG) entre les composants
35 : Data base contenant informations sur les différents composants
36 : Manager, en charge de l'activation et de la désactivation des différents composants
37 : Appel procédural redirigé vers le PLUG du moteur logiciel

En référence à cette figure, le principe de base de l'invention est le suivant :
- un code initial standard (compilable de manière autonome) est retravaillé de manière automatique (pré-processing) afin que toutes les utilisations de ressources externes à ce code initial soit remplacées par :
- une redirection du processeur vers une entrée unique par composant, d'un code appelé le PROXY ou le PLUG indifféremment. La valeur de cette entrée unique pourra être modifié par la suite lors de l'activation du composant sur le système embarqué.
- l'ajout d'information dans le contexte du processeur avant cette redirection, information permettant de connaître la ressource externe demandé (par exemple numéro du composant demandé et le service associé).

Le code ainsi généré est compilable et linkable (édition de lien) de manière autonome. A ce code, on ajoute lors de cette phase de pré-processing un certain nombre d'informations supplémentaires qui y seront accolées afin de constituer ce que l'on appelle un composant, en particulier des informations de prototypage des services fournis par le composant. Ainsi, un composant ne peut communiquer avec le reste du système que par l'intermédiaire du PLUG.
- un moteur se trouve sur le système embarqué et permet d'activer les composants en conservant une information sur les services qu'ils implémentent et permet surtout leur communication via le PLUG. Le PLUG est un bout logiciel, qui, en mode standard, en quelques instructions processeur, récupère les informations de la fonction cible demandée par un composant et fait 'sauter' le processeur directement à l'emplacement du code ou cette fonction (service) se trouve.

Grâce à ce mécanisme, les entités logicielles se trouvent complètement isolées du reste du système via le PLUG. Le PLUG peut, selon la configuration du système et les contraintes associées, ajouter des fonctionnalités de contrôle de flux de communication, de redirection (entre différents processeurs ou entre composants de natures différentes ou de privilèges différents), de remplacement de composants, de traduction d'un langage à un autre, de passerelle vers une autre entité d'exécution (autre tache du processeur, autre zone mémoire, autre processeur, carte à puce, réseau, accessoires).

Cette technologie permet ainsi de récupérer tous les avantages liés à l'utilisation d'une approche composant (facilité de portage, de test, de maintenant, stabilité, sécurité, flexibilité de la configuration logicielle, flexibilité au niveau de l'architecture hardware ...) sans aucun compromis au niveau performance ni contrainte pour le développeur. D'autres part, les composants logiciels étant générés de manières indépendantes, ils peuvent être interchangés, modifiés, mis à jour ou ajoutés sans aucun impact sur le reste du système. Avec ce principe, la décomposition en de tels composants peut par exemple être optimisée afin de minimiser le nombre de fonction cibles non implémentées ou selon une corrélation entre la taille du composant et sa probabilité d'être modifié.

Cette technologie permet donc par exemple de remplacer un composant par un autre remplissant la même fonction ou d'associer des droits sur les composants directement gérés par le PLUG, pour savoir quel composant est autorisé à appeler quel autre.

Le PLUG peut aussi être implémenté de façon à pouvoir connaître et éventuellement enregistrer les appels qu'il traite, avec les différents paramètres associés. Ce système d'enregistrement permet alors de simuler un composant en l'assimilant aux appels de fonctions réalisés, par exemple dans le but de détecter d'éventuelles erreurs dans le code embarqué. Une fois une erreur détectée, ces enregistrements de détection d'erreur sont ensuite transmis à une autre ressource informatique en charge de l'analyse des erreurs.

Ces enregistrements des appels peuvent également comporter des informations supplémentaires pour chacun de ces appels. Ces informations peuvent être des informations de temps, de contexte d'exécution, d'utilisation mémoire ou tout autre information nécessaire à la traçabilité et à la gestion des composants.

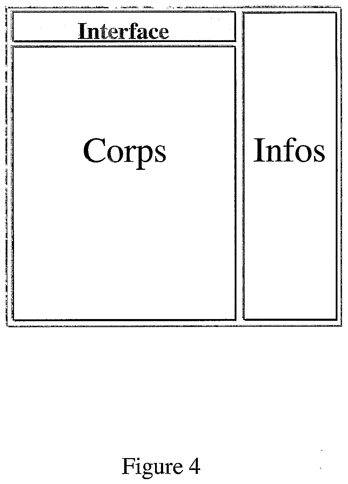

Illustré figure 4, un composant logiciel selon l'invention est un bout logiciel, généré de manière à être complètement isolé, à l'exécution, du reste du système si ce n'est via les échanges de requêtes et de réponses de services vis-à-vis d'autres composants.

Par exemple, dans le cas d'un composant codé en langage C, (composant B-Plug), aucun échange, qu'il soit explicite (via un appel de fonction par exemple) ou implicite (via l'utilisation de variable globale, ...) n'est permis. Le composant est indépendant, c'est un bloc homogène incluant des données et des instructions processeurs, et ce, même à l'exécution.

Le moyen d'accéder à un service d'un composant est appelé l'interface. L'interface peut en particulier être décrite via le langage IDL, dédié à cet usage. Selon le type des différents composants, cette interface est implémentée par un certain nombre de fonctions, de méthodes, ...

Par exemple, l'interface de services fournis par un composant B-Plug est implémentée sous la forme d'un ensemble de fonction C, qui peuvent être appelées (via le PLUG) par d'autres composants (pour peu qu'ils aient les droits d'accès associés).

L'implémentation des services, à proprement parler, se trouve, elle, dans le corps du composant. Le corps du composant peut être amené à utiliser des services d'autres composants.

Exemple : le service 'ALARME' génère une action spécifique à un instant donné, préprogrammé. L'interface du composant Alarme permet au client de :
- définir quelle action enclencher par l'alarme,
- définir l'instant où cette action doit être déclenchée.

En addition de l'interface et du corps du composant, un certain nombre d'information sont rajoutées au composant, lors de sa génération. Ces informations seront utilisées par la suite par le moteur, tournant sur le système.

Un composant peut ainsi par exemple inclure les informations comme :
- le type du composant (binaire (codé en C), JAVA, ...),
- descriptif du service fourni,
- liste des services et ressources nécessaires pour l'exécution du composant,
- privilège, droits d'accès,
- manière d'être accédé (dans le contexte de l'appelant, dans le contexte du composant...).

Plus particulièrement, le composant inclut un certain nombre d'informations, dites de qualité de service qui vont être utilisées par le système embarqué pour allouer aux composants des ressources avant son exécution. Ces informations de qualité de service peuvent être :
- le besoin en mémoire vive du composant pour son fonctionnement sous forme de besoin minimal, besoin moyen et besoin optimal,
- les listes des autres composants (composants associés) dont a besoin le composant pour son fonctionnement ainsi que les numéros de version de ces composants associés. Il faut noter que le système embarqué ne lancera pas l'exécution du composant si les composants associés ne répondent pas au numéro de version supérieur ou égal à celui indiqué par le composant.
- le besoin en termes de puissance processeur du composant. Il faut noter qu'éventuellement, le système embarqué modifie la fréquence du processeur du système embarqué en fonction des besoins, notamment en puissance, du composant ou des composants associés. Il peut aussi décider de faire exécuter le composant sur une ou l'autre de ses ressources informatiques selon la disponibilité de processing des ressources. D'une façon générale, le système embarqué peut décider des ressources d'exécution afin de minimiser sa consommation en puissance.

Toutes ces informations de qualité de service, et la gestion effectuée par le système embarqué permettent alors à celui-ci de refuser l'exécution d'un composant s'il ne peut garantir les besoins exprimés dans les informations de qualité de service.

Par ailleurs, le composant inclut un certain nombre d'informations (information composant) permettant de spécifier les fonctionnalités réalisées par le composant (nom du composant, version, les listes des fonctions implémentées par le composant ...). Ces informations composant ainsi que la liste des composants disponibles peuvent être fournies à une autre ressource informatique par le système embarqué, si une demande a été faite au préalable.

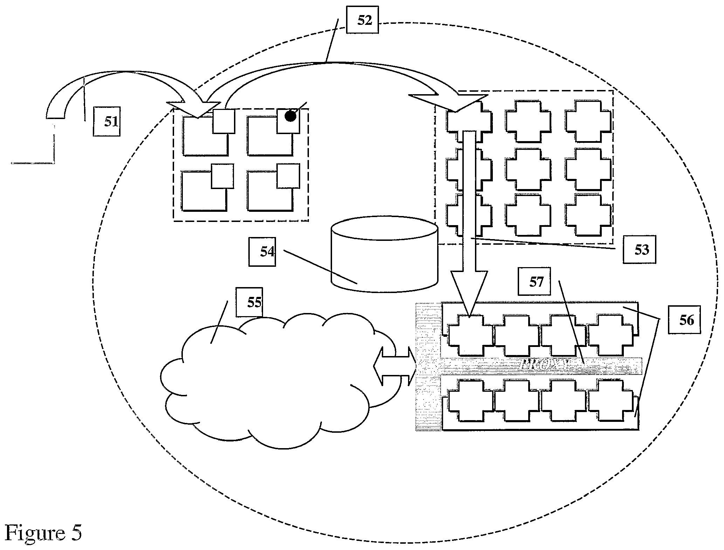

Les principaux états des composants selon l'invention sont illustrés figure 5.

L'étape 51 est une étape de téléchargement où un composant peut être téléchargé dans le système.

Une étiquette peut être généré par le système à ce moment pour indiquer un certain nombre de propriétés (en particulier de sécurité) liées au composant. Tout type de téléchargement peut être utilisé lors de cette étape.

Il faut noter que cette étape de téléchargement n'est pas absolument nécessaire, puisque le composant peut bien sûr déjà résider sur le système embarqué.

Lors de l'étape 52, le composant est ensuite installé. Un certain nombre d'actions sont réalisées afin de permettre au composant d'être activé facilement par la suite. Éventuellement, lors de cette installation du composant, ou au moment de son téléchargement, celui-ci peut-être sous forme cryptée pour des raisons de sécurité. Les étapes d'exécution du composant comprendront alors dans ce cas, en plus, une étape de décryptage.

Plus précisément, l'installation ou l'exécution du composant peut être conditionnée à une autorisation préalable. Dans ce cas, l'autorisation est accordée en cas d'adéquation entre une clé détenue par le système embarqué (clé système) et une clé détenue par le composant à exécuter (clé composant). La clé système peut par exemple être calculée à partir d'une information spécifiant de manière unique le système embarqué.

Au moment de l'exécution du composant par le système embarqué, une notification est fournie à une autre ressource informatique. Suite à cette notification, celle-ci transmet alors une autorisation ou un refus d'exécution du composant au système embarqué.

Les autorisations peuvent par exemple être sous la forme d'une clé externe à combiner avec la clé système et la clé composant. Elles peuvent être délivrées gratuitement, ou sont liées à une transaction financière, avant ou après la commercialisation du système embarqué.

Lors de l'étape 53, lorsqu'un des services fournis par un composant est demandé par une partie du système ou quand l'utilisateur souhaite activer un certain service, le composant associé est activé. Le composant est exécuté dans un conteneur, dont la forme dépend du type du composant. Le PLUG est quant à lui en charge de l'aiguillage des différents échanges de services entre les composants. Le PLUG peut aussi être connecté au code résiduel, non compilé sous forme de composant selon l'invention.

La base de données 54 enregistre les états des différents composants (installable, installé, activé, ...) ainsi qu'un certain nombre d'autres informations (descriptifs des services, des versions associées, des paramètres de sécurité, de la localisation du service ...). Une fois installé, un composant est toujours enregistré auprès de la base de données de son unité de process.

Il faut noter par exemple que la table de droit d'accès est modifiable par l'utilisateur final ou à distance, par une autre ressource informatique.

Lors d'une étape 55, un composant peut aussi être désinstallé ou remplacé. Le remplacement peut se faire de manière statique (c'est-à-dire alors que le composant n'était pas actif) ou de manière dynamique (pendant l'activation).

Par ailleurs, il faut noter que lors de la création du composant à partir du code originel, si des fonctions cibles ont comme paramètre l'adresse d'une fonction définie dans le composant lui-même, ce paramètre est remplacé par l'appel d'une fonction spécifique appelée fonction de call-back. Cette fonction fournit un identifiant de la fonction initiale et appelle comme précédemment la fonction d'aiguillage PLUG.

De la même façon, à la création du composant logiciel, on identifie toute information non définie dans le code originel et dont le composant à besoin afin de pouvoir être exécuté. Ces informations sont alors rajoutées dans le composant lors de sa génération. Une fois que les informations manquantes peuvent être fournies par le système, le code du composant est modifié afin de le rendre exécutable.

D'autres composants peuvent être liés au composant logiciel. En particulier :
Un conteneur est responsable de l'exécution d'un composant, un même conteneur pouvant être partagé par tous les composants d'un même type ;
Un loader est un composant spécifique permettant de faire un transfert (copie) d'un composant d'une localisation à une autre (exemple : copie d'une mémoire à une autre) ;
Un provisionner est en charge de vérifier un certain nombre de paramètre d'un composant afin de pouvoir le télécharger dans le système ;
Un verifier vérifie l'intégrité du composant, ses droits, ...

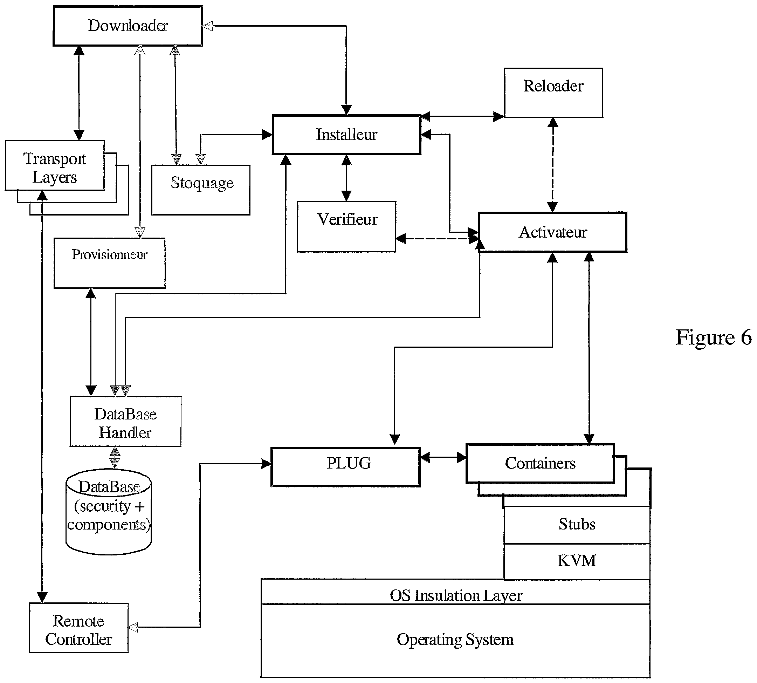

Illustré figure 6, le moteur selon l'invention est architecturé en quatre parties distinctes.

Le downloader est en charge du téléchargement d'un composant logiciel dans le système. Il interagit avec :
- les couches de transports du système quelles qu'elles soient,
- le provisionneur qui accepte ou refuse le téléchargement,
- le ou les systèmes de stockage disponibles dans le système.

Le manager inclut :
- l'installeur : en charge de l'installation et de la désinstallation des composants logiciels ,
- l'activateur : en charge d'activer ou de désactiver des composants.

La base de données est en charge de rassembler les informations sur les composants installés et activés dans le système.

Enfin, le PLUG est en charge de la communication entre les différents composants. Son implémentation est décrite plus largement par la suite.

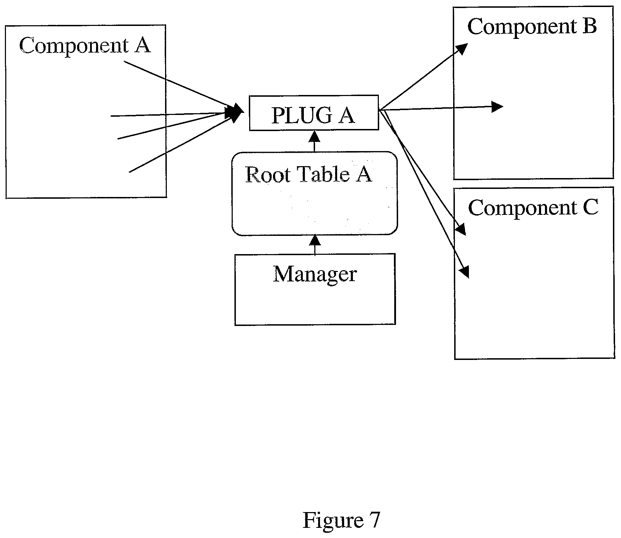

Le principe de redirection grâce au PLUG est illustré figure 7.

Tout d'abord, le composant est installé en mémoire. Une partie de la mémoire du système est réservée au moteur. Le manager du moteur est en charge d'installer les composants dans cette zone réservée. Les composants sont stockés les uns après les autres.

De plus, lors de son exécution, le composant est placé dans une zone mémoire du système embarqué différente de la zone mémoire dans laquelle il se trouvait initialement, dite zone mémoire d'exécution. Cette zone mémoire d'exécution possède des propriétés spécifiques en termes de vitesse d'exécution, de consommation et d'accessibilité particulièrement adaptées au composant.

Les composants peuvent être aussi désinstallés. Le manager peut ainsi être amené à faire des opérations de défragmentation de la zone de mémoire réservée.

Les composants sont ensuite connectés au PLUG. Lors de la génération du composant, tous les accès externes de ce composant ont été redirigés vers une adresse unique sans signification (par exemple 0xFFFFFFF). A l'installation, le composant se voit attribué une adresse d'entrée dans le PLUG qui va être substituée à l'adresse sans signification. Ainsi, tout appel externe du composant est transformé en fait à un appel de l'adresse d'entrée au PLUG dédiée au composant.

A l'activation, le manager du moteur fournie une table d'aiguillage au PLUG indiquant où se trouve les composants et où se trouvent leurs informations (en particulier les différents services fournies par chaque composant). Lorsqu'un service externe est demandé par un composant, le processeur est ainsi redirigé vers l'adresse d'entrée du PLUG lié au composant, alors que deux informations ou identifiants ont été rajoutées, grâce à la génération du composant, selon l'invention : le numéro du composant souhaité ainsi que le numéro du service voulu, ou fonction cible. Grâce à ces deux informations et aux informations fournies par le manager , le PLUG va rediriger (via une instruction du type JUMP et non CALL c'est-à-dire sans aucun nouvel appel de fonction ni aucune copie d'information liée au service demandé) le processeur vers l'endroit où se trouve le service désiré. La fonction d'aiguillage prend donc en paramètre au moins les deux identifiants ci-dessus correspondant à des fonctions cibles non implémentées ou aux fonctions de call-back dans le composant initial. Ces identifiants sont stockés dans la pile ou dans un registre du processeur, utilisée par la fonction d'aiguillage PLUG pour la redirection vers les fonctions correspondantes.

Cette fonction d'aiguillage PLUG est réalisée à partir d'une table de correspondance Root Table entre les identifiant des fonctions cibles et les adresses des fonctions cibles. Ceci est réalisé par exemple sous la forme de deux sous-tables, une première faisant correspondre l'information associée au composant logiciel et le composant implémentant la fonction cible, et une deuxième, faisant correspondre le numéro de la fonction et son adresse dans le composant associé.

Ces sous-tables sont générées lors de la création du composant et enregistrées dans la mémoire morte avec le code du composant, alors que la table principale Root Table est enregistrée en mémoire vive.

Ainsi, supposons qu'un composant A souhaite appeler la fonction DrawLine d'un composant graphique 2D.

Lors de la génération du composant, l'appel de la fonction DrawLine du code initial du composant est remplacé par l'appel, avec les mêmes paramètres que si on appelait DrawLine, du PLUG. En plus, l'information du composant souhaité (composant graphique 2D) ainsi que le numéro du service voulu (service DrawLine) sont ajoutés. A l'exécution, l'appel de la fonction DrawLine sera en fait remplacé par un aiguillage d'abord vers le PLUG, qui, grâce au numéro du composant et du service pourra rediriger le processeur vers la fonction DrawLine.

La fonction d'aiguillage PLUG réalise en outre un certain nombre d'actions dépendant de la fonction cible appelée. La liste des actions par fonction cible est préalablement définie et stockée sur le système embarqué. Les actions pourront être par exemple le passage d'un contexte du processeur à un autre, l'installation et l'exécution d'un autre composant, la notification d'un ou de plusieurs composants de l'appel de la fonction cible, la notification de l'utilisateur du système embarqué ou la notification d'une autre ressource informatique.

Grâce au PLUG, et ce de manière statique ou dynamique, il est ainsi possible de :
- rediriger le flot de communication d'un composant à un autre,
- de remplacer un composant par un autre (débuggé, ou mis à jour, ou correspondant à une autre implémentation),
- de traduire la demande de service d'un langage à un autre (dans l'exemple précédent, le PLUG pouvait traduire la demande de la fonctionnalité DrawLine dans un autre langage et envoyer cette demande, traduite, au composant adéquat),
- de rediriger la demande vers un autre processeur (par exemple, la fonction DrawLine pourrait être implémentée sur un processeur graphique dédié. A ce moment-là, le PLUG est relié, via un transport quelconque à un autre PLUG résidant sur le processeur graphique, et le deux PLUG peuvent se passer de manière transparente les demandes et réponses de service), dans le système embarqué, ou hors du système embarqué.

Notons que dans le cas de gestion dynamique, les modifications pourront par exemple provenir d'indication d'une autre ressource informatique ou de l'utilisateur du système embarqué sous forme de configuration.

Par ailleurs, si le composant appelé par le PLUG n'est pas disponible, celui-ci génère une action spécifique, déterminée par l'identifiant du composant non disponible. Ces actions pourront être la création d'un message d'alerte, ou la recherche d'un composant réalisant la même fonction, au même format ou dans un autre format que celui de la fonction cible initiale.

Il faut noter que la communication entre les composants peut se faire selon une couche de transport (transport layer) quelconque. La couche de transport peut ainsi être la voie radio dans le cas d'un téléphone mobile (à ce moment-là, un composant peut se trouver sur le réseau, au niveau de l'opérateur, alors que l'autre se trouve dans le téléphone mobile) ou encore un lien type Bluetooth ou Wifi permettant :
- de gérer des Personal Area Network (par exemple, l'écran se trouve sur un autre appareil relié au téléphone via un lien radio type Bluetooth),
- de contrôler les droits d'accès entre les différents composants,
- d'ajouter de la visibilité en explicitant toutes les communications ayant lieu via le PLUG, pour des raisons d'aide au développement,
- de rediriger une partie des communications afin d'émuler les services associés sur un émulateur type PC,
- ou tout autre application utilisant le fait que tout le flot de communication transitant entre un composant et le reste du système peut être manipulé très facilement au niveau du PLUG.

Notons enfin que la décomposition en composants de l'invention peut être également utilisée par un système non-embarqué, si celui-ci simule un système embarqué.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de gestion d'un système embarqué comprenant:
au moins un code originel associé à un équipement informatique,
au moins un code embarqué associé audit système embarqué,
au moins un processeur associé audit système embarqué,
**caractérisé en ce qu'**il comprend les étapes consistant à:
la création d'au moins un composant logiciel autonome consistant:
à analyser ledit code originel pour identifier les fonctions cibles appelées par ledit code originel et non implémentées dans ledit code originel, et
à déterminer pour chacune desdites fonctions non implémentées un identifiant de fonction correspondant,
à remplacer les appels desdites fonctions non implémentées par l'appel d'au moins une fonction d'aiguillage (PLUG) implémentée par ledit code embarqué,
l'exécution dudit composant sur le système embarqué, ladite fonction d'aiguillage PLUG commandant la redirection du processeur vers l'adresse de la fonction cible non implémentée correspondant audit identifiant de fonction.

2. Procédé de gestion d'un système embarqué selon la revendication 1, et comprenant les étapes suivantes supplémentaires:
à la création du composant logiciel autonome:
à analyser ledit code originel pour identifier les fonctions cibles appelées ayant comme paramètre l'adresse d'une fonction originelle définie dans le composant, et
à remplacer ce dit paramètre de call-back par l'appel d'une fonction spécifique,
à générer automatiquement ladite fonction spécifique associée, fonction fournissant un identifiant de ladite fonction originelle et appelant au moins une fonction d'aiguillage PLUG implémentée par ledit code embarqué.

3. Procédé de gestion d'un système embarqué selon la revendication 1, et comprenant les étapes suivantes supplémentaires:
à la création du composant logiciel autonome:
à analyser ledit code originel pour identifier toute information non définie dans le code originel et dont le composant à besoin afin de pouvoir être exécuté,
à ajouter la liste de ces informations manquantes dans ledit composant lors de sa génération,
à l'exécution dudit composant, à modifier le code du dudit composant une fois que la (ou les) information(s) initialement manquante(s) peut (peuvent) être fournie(s) par le système, ce afin de rendre le composant exécutable sur ledit système embarqué.

4. Procédé de gestion d'un système embarqué selon la revendication 1, **caractérisé en ce que** ledit composant réside sur ledit système embarqué.

5. Procédé de gestion d'un système embarqué selon la revendication 1, **caractérisé en ce que** ledit composant est téléchargé par ledit code embarqué.

6. Procédé de gestion d'un système embarqué selon la revendication 1, **caractérisé en ce que** ledit composant est sous forme cryptée au moment de sa création.

7. Procédé de gestion d'un système embarqué selon la revendication 6, **caractérisé en ce qu'**il comporte en outre une étape de décryptage dudit composant.

8. Procédé de gestion d'un système embarqué selon la revendication 1, ledit composant est remplacé par un autre composant remplissant la même fonction.

9. Procédé de gestion d'un système embarqué selon la revendication 1, **caractérisé en ce que** ledit composant est placé à l'exécution dans une zone mémoire du système embarqué, zone mémoire dite d'exécution, zone différente de la zone mémoire dans laquelle il se trouvait initialement.

10. Procédé de gestion d'un système embarqué selon la revendication 9, **caractérisé en ce que** ladite zone mémoire d'exécution est accessible par ledit processeur et possède des propriétés spécifiques en termes de vitesse d'exécution, de consommation, d'accessibilité ou en termes de droits d'accès.

11. Procédé de gestion d'un système embarqué selon la revendication 1, **caractérisé en ce que** les identifiants de fonctions cibles non implémentées constituent des paramètres de la fonction d'aiguillage PLUG.

12. Procédé de gestion d'un système embarqué selon la revendication 1, **caractérisé en ce qu'**il ne comporte aucune opération de copie des paramètres de la fonction cibles non implémentées.

13. Procédé de gestion d'un système embarqué selon la revendication 1, **caractérisé en ce que** l'identifiant de la fonction non implémentée est stocké dans une pile du processeur avant l'appel de la fonction d'aiguillage PLUG,
l'identifiant ainsi stocké étant ensuite utilisé par ladite fonction d'aiguillage pour réaliser la commande de la redirection vers la fonction correspondant audit identifiant.

14. Procédé de gestion d'un système embarqué selon la revendication 1, **caractérisé en ce que** l'identifiant de la fonction non implémentée est stocké dans un registre du processeur avant l'appel de la fonction d'aiguillage (PLUG), l'identifiant ainsi stocké étant ensuite utilisé par ladite fonction d'aiguillage pour réaliser la commande de la redirection vers la fonction correspondant audit identifiant.

15. Procédé de gestion d'un système embarqué selon la revendication 1, **caractérisé en ce que** les fonctions cibles sont implémentées sur un autre processeur de l'équipement embarqué.

16. Procédé de gestion d'un système embarqué selon la revendication 1, **caractérisé en ce que** les fonctions cibles sont implémentées sur une autre ressource informatique, autre que ledit système embarqué.

17. Procédé de gestion d'un système embarqué selon la revendication 1, **caractérisé en ce que** lesdits identifiants de fonction cible comportent une première information correspondant au composant logiciel implémentant ladite fonction cible et une deuxième information correspondant au numéro de la fonction cible dans ledit composant.

18. Procédé de gestion d'un système embarqué selon la revendication 1, **caractérisé en ce que** la fonction d'aiguillage (PLUG) est réalisée à partir d'au moins une table de correspondance entre l'identifiant de fonction cible, et l'adresse de la fonction cible.

19. Procédé de gestion d'un système embarqué selon les revendications 17 et 18, **caractérisé en ce que** ladite table de correspondance est subdivisée en une première table de correspondance entre ladite information correspondant au composant logiciel et le composant implémentant ladite fonction cible, et, pour chacun desdits composants, une deuxième table de correspondance entre ledit numéro de la fonction et l'adresse de ladite fonction cible dans le composant correspondant.

20. Procédé de gestion d'un système embarqué selon la revendication 19, **caractérisé en ce que** lesdites deuxièmes tables sont générées lors de la création du composant.

21. Procédé de gestion d'un système embarqué selon la revendication 19, **caractérisé en ce que** lesdites deuxièmes tables sont enregistrées en mémoire morte.

22. Procédé de gestion d'un système embarqué selon la revendication 19, **caractérisé en ce que** ladite première table est enregistrée en mémoire vive.

23. Procédé de gestion d'un système embarqué selon la revendication 1, **caractérisé en ce que** ledit composant inclut au moins une information permettant de spécifier les fonctionnalités réalisées par ledit composant.

24. Procédé de gestion d'un système embarqué selon la revendication 24, **caractérisé en ce que** ladite information est le nom dudit composant.

25. Procédé de gestion d'un système embarqué selon la revendication 24, **caractérisé en ce que** ladite information est le numéro de version dudit composant.

26. Procédé de gestion d'un système embarqué selon la revendication 24, **caractérisé en ce que** ladite information est la liste des fonctions implémentées par ledit composant.

27. Procédé de gestion d'un système embarqué selon la revendication 24, **caractérisé en ce que** le système embarqué est apte à fournir la liste des composants disponibles sur ledit système embarqué ainsi que les informations composants associées, à une autre ressource informatique en ayant fait la demande au préalable.

28. Moteur embarqué comportant :
au moins un code originel associé à un équipement informatique,
au moins un code embarqué associé audit moteur embarqué,
au moins un processeur associé audit moteur embarqué,
**caractérisé en ce qu'**il réalise les étapes du procédé selon la revendication 1.

29. Système embarqué comportant
le moteur selon la revendication 1,
au moins un code originel associé à un équipement informatique,
au moins un code embarqué associé audit système,
au moins un processeur associé au système.

30. Système non-embarqué simulant un système embarqué comportant :
le moteur selon la revendication 1,
au moins un code originel associé à un équipement informatique,
au moins un code embarqué associé audit système non-embarqué,
au moins un processeur associé au système non-embarqué.

## Patentansprüche

1. Verfahren zum Verwalten eines eingebetteten Systems,
das Folgendes aufweist:
- mindestens einen originären Code, der einem Computergerät zugeordnet ist,
- mindestens einen eingebetteten Code, der dem eingebetteten System zugeordnet ist,
- mindestens einen Prozessor, der dem eingebetteten System zugeordnet ist,
**dadurch gekennzeichnet,**
**dass** es folgende Schritte umfasst:
Erzeugen von mindestens einer autonomen Softwarekomponente, bestehend aus
- Analysieren des originären Codes, um die Zielfunktionen zu identifizieren, die mit dem originären Code aufgerufen werden und nicht in dem originären Code implementiert sind, und
- Bestimmen einer entsprechenden Funktionskennung für jede der nicht implementierten Funktionen,
- Ersetzen der Aufrufe der Funktionen, die nicht durch den Aufruf von mindestens einer Routing-Funktion (PLUG) implementiert sind, durch den eingebetteten Code,
- Speichern der Kennung für jede nicht implementierte Funktion in einem Speicher öder in einem Register des Prozessors, der dem eingebetteten System zugeordnet ist,
- Ausführen der Komponente auf dem eingebetteten System, wobei die Routing-Funktion PLUG die Umleitung des Prozessors zu der Adresse der nicht implementierten Zielfunktion vorgibt, die der Funktionskennung entspricht.

2. Verfahren zum Verwalten eines eingebetteten Systems nach Anspruch 1,
das folgende zusätzliche Schritte umfasst:
bei der Erstellung der autonomen Softwarekomponente:
- Analysieren des originären Codes, um die aufgerufenen Zielfunktonen zu identifizieren, die als Parameter die Adresse einer orginären Funktion besitzen, die in der Komponente definiert ist, und
- Ersetzen des Rückrufparameters durch Aufrufen einer spezifischen Funktion,
- automatisches Erzeugen der zugeordneten spezifischen Funktion, wobei die Funktion eine Kennung der originären Funktion bietet und mindestens eine Routing-Funktion (PLUG) aufruft, die in dem eingebetteten Code implementiert ist.

3. Verfahren zum Verwalten eines eingebetteten Systems nach Anspruch 1,
das folgende zusätzliche Schritte umfasst:
bei der Erstellung der autonomen Softwarekomponente:
- Analysieren des originären Codes, um jede Information zu identifizieren, die in dem originären Code nicht definiert ist und deren Komponente für die Ausführung benötigt wird,
- Hinzufügen einer Liste dieser fehlenden Informationen in der Komponente während ihrer Erzeugung,
bei der Ausführung der Komponente, Modifizieren des Codes der Komponente, sobald die Informationen, die ursprünglich fehlen, von dem System geliefert werden, um die Komponente in dem eingebetteten System ausführbar zu machen.

4. Verfahren zum Verwalten eines eingebetteten Systems nach Anspruch 1,
**dadurch gekennzeichnet,**
**dass** die Komponente sich in dem eingebetteten System befindet.

5. Verfahren um Verwalten eines eingebetteten Systems nach Anspruch 1,
**dadurch gekennzeichnet,**
**dass** die Komponente von dem eingebetteten Code heruntergeladen wird.

6. Verfahren zum Verwalten eines eingebetteten Systems nach Anspruch 1,
**dadurch gekennzeichnet,**
**dass** die Komponente sich zum Zeitpunkt ihrer Erzeugung in einer verschlüsselten Form befindet.

7. Verfahren zum Verwalten eines eingebetteten Systems nach Anspruch 6,
**dadurch gekennzeichnet,**
**dass** es ferner einen Schritt zum Entschlüsseln der Komponente umfasst.

8. Verfahren zum Verwalten eines eingebetteten Systems nach Anspruch 1, wobei die Komponente durch eine andere Komponente ersetzt wird, die die gleiche Funktion erfüllt.

9. Verfahren zum Verwalten eines eingebetteten Systems nach Anspruch 1,
**dadurch gekennzeichnet,**
**dass** die Komponente zur Ausführung gebracht wird in einer Speicherzone des eingebetteten Systems, einer Speicherzone, die als Ausführungszone bezeichnet wird, einer anderen Zone als der Speicherzone, in der sie sich ursprünglich befand.

10. Verfahren zum Verwalten eines eingebetteten Systems nach Anspruch 9,
**dadurch gekennzeichnet,**
**dass** die Speicherzone zur Ausführung für den Prozessor zugänglich ist und spezifische Eigenschaften besitzt hinsichtlich der Ausführungsgeschwindigkeit, des Verbrauchs, der Zugänglichkeit oder der Zugriffsrechte.

11. Verfahren zum Verwalten eines eingebetteten Systems nach Anspruch 1,
**dadurch gekennzeichnet,**
**dass** die nicht implementierten Zielfunktionskennungen Parameter der Routing-Funktion PLUG bilden.

12. Verfahren zum Verwalten eines eingebetteten Systems nach Anspruch 1,
**dadurch gekennzeichnet,**
**dass** es keine Operation zum Kopieren der Parameter der nicht implementierten Zielfunktionen umfasst.

13. Verfahren zum Verwalten eines eingebetteten Systems nach Anspruch 1,
**dadurch gekennzeichnet,**
**dass** die Kennung der nicht implementierten Funktion vor dem Aufruf der Routing-Funktion PLUG in einem Speicher des Prozessors gespeichert wird, wobei die derart gespeicherte Kennung dann von der Routing-Funktion verwendet wird, um den Befehl zur Umleitung der Funktion zu der entsprechenden Funktionskennung auszuführen.

14. Verfahren zum Verwalten eines eingebetteten Systems nach Anspruch 1,
**dadurch gekennzeichnet,**
**dass** die Kennung der nicht implementierten Funktion vor dem Aufruf der Routing-Funktion PLUG in einem Register des Prozessors gespeichert wird, wobei die derart gespeicherte Kennung dann von der Routing-Funktion verwendet wird, um den Befehl zur Umleitung der Funktion zu der entsprechenden Funktionskennung auszuführen.

15. Verfahren zum Verwalten eines eingebetteten Systems nach Anspruch 1,
**dadurch gekennzeichnet,**
**dass** die Zielfunktionen auf einem anderen Prozessor des eingebetteten Geräts implementiert werden.

16. Verfahren zum Verwalten eines eingebetteten Systems nach Anspruch 1,
**dadurch gekennzeichnet,**
**dass** die Zielfunktionen auf einer anderen Computer-Ressource implementiert werden, und zwar einer anderen als dem eingebetteten System.

17. Verfahren zum Verwalten eines eingebetteten Systems nach Anspruch 1,
**dadurch gekennzeichnet,**
**dass** die Zielfunktionskennungen eine erste Information enthalten, die der Softwarekomponente entspricht, die die Zielfunktion implementiert, und eine zweite Information enthalten, die der Nummer der Zielfunktion in der Komponente entspricht.

18. Verfahren zum Verwalten eines eingebetteten Systems nach Anspruch 1,
**dadurch gekennzeichnet,**
**dass** die Routing-Funktion PLUG aus mindestens einer Korrespondenztabelle zwischen der Zielfunktionskennung und der Adresse der Zielfunktion realisiert wird.

19. Verfahren zum Verwalten eines eingebetteten Systems nach den Ansprüchen 17 und 18,
**dadurch gekennzeichnet,**
**dass** die Korrespondenztabelle unterteilt wird in eine erste Korrespondenztabelle zwischen der Softwarekomponente und der Komponente, die die Zielfunktion implementiert, und für jede der Komponenten, in eine zweite Korrespondenztabelle zwischen der Nummer der Funktion und der Adresse der Zielfunktion in der entsprechenden Komponente.

20. Verfahren zum Verwalten eines eingebetteten Systems nach Anspruch 19,
**dadurch gekennzeichnet,**
**dass** die zweiten Tabellen während der Erzeugung der Komponente generiert werden.

21. Verfahren zum Verwalten eines eingebetteten Systems nach Anspruch 19,
**dadurch gekennzeichnet,**
**dass** die zweiten Tabellen in einem Nur-Lese-Speicher (ROM) gespeichert werden.

22. Verfahren zum Verwalten eines eingebetteten Systems nach Anspruch 19,
**dadurch gekennzeichnet,**
**dass** die erste Tabelle in einem RAM gespeichert wird.

23. Verfahren zum Verwalten eines eingebetteten Systems nach Anspruch 1,
**dadurch gekennzeichnet,**
**dass** die Komponente mindestens eine Information enthält, um die Funktionen zu spezifizieren, die von der Komponente durchgeführt werden.

24. Verfahren zum Verwalten eines eingebetteten Systems nach Anspruch 23,
**dadurch gekennzeichnet,**
**dass** die Information die Nummer der Komponente ist.

25. Verfahren zum Verwalten eines eingebetteten Systems nach Anspruch 23,
**dadurch gekennzeichnet,**
**dass** die Information die Nummer der Version der Komponente ist.

26. Verfahren zum Verwalten eines eingebetteten Systems nach Anspruch 23,
**dadurch gekennzeichnet,**
**dass** die Information die Liste der Funktionen ist, die von der Komponente implementiert werden.

27. Verfahren zum Verwalten eines eingebetteten Systems nach Anspruch 23,
**dadurch gekennzeichnet,**
**dass** das eingebettete System dazu ausgelegt ist, die Liste der auf dem eingebetteten System verfügbaren Komponenten sowie die zugeordneten Komponenteninformation zu liefern, und zwar an eine andere Computer-Ressource, die die Anfrage vorher gemacht hat.

28. Eingebettete Betriebseinrichtung, die Folgendes aufweist:
- mindestens einen originären Code, der einem Computergerät zugeordnet ist,
- mindestens einen eingebetteten Code, der der eingebetteten Betriebseinrichtung zugeordnet ist, und
- mindestens einen Prozessor, der der eingebetteten Betriebseinrichtung zugeordnet ist,
**dadurch gekennzeichnet,**
**dass** sie die Schritte des Verfahrens gemäß Anspruch 1 ausführt.

29. Eingebettetes System, das Folgendes aufweist:
- die Betriebseinrichtung gemäß Anspruch 28,
- mindestens einen originären Code, der einem Computergerät zugeordnet ist,
- mindestens einen eingebetteten Code, der dem System zugeordnet ist,
- mindestens einen Prozessor, der dem System zugeordnet ist.

30. Nicht-eingebettetes System, das ein eingebettetes System simuliert und Folgendes aufweist:
- die Betriebseinrichtung gemäß Anspruch 28,
- mindestens einen originären Code, der einem Computergerät zugeordnet ist,
- mindestens einen eingebetteten Code, der dem nicht-eingebetteten System zugeordnet ist, und
- mindestens einen Prozessor, der dem nicht-eingebetteten System zugeordnet ist.

## Claims

1. A method for managing an embedded system comprising:
at least one original code associated with computer equipment,
at least one embedded code associated with said embedded system,
at least one processor associated with said embedded system,
**characterized in that** the method comprises the steps of:
creating at least one autonomous software component consisting of:
analyzing said original code to identify the target functions called by said original code and unimplemented in said original code, and
determining for each of said unimplemented functions a corresponding function identifier,
replacing the calls of said unimplemented functions by the call of at least one routing function (PLUG) implemented by said embedded code,
storing the identifier of each unimplemented function in a stack or a register of the processor associated with the embedded system,
executing said component on the embedded system, said PLUG routing function commanding the redirection of the processor to the address of the unimplemented target function corresponding to said function identifier.

2. A method of managing an embedded system according to claim 1, and comprising the following additional steps:
upon creation of the autonomous software component:
analyzing said original code to identify the called target functions having as a parameter the address of an original function defined in the component, and
replacing said call-back parameter by the call to a specific function,
automatically generating said associated specific function, the function providing an identifier for said original function, and calling at least one PLUG routing function implemented by said embedded code.

3. A method of managing an embedded system according to claim 1, and comprising the following additional steps:
upon creation of the autonomous software component:
analyzing said original code to identify any undefined information in the original code and which the component requires for execution,
adding the list of this missing information to said component when it is created,
upon execution of said component, modifying the code of said component once the information initially missing can be provided by the system, in order to make the component executable on said embedded system.

4. A method of managing an embedded system according to claim 1, **characterized in that** said component resides on said embedded system.

5. A method of managing an embedded system according to claim 1, **characterized in that** said component is downloaded by said embedded code.

6. A method of managing an embedded system according to claim 1, **characterized in that** said component is in encrypted form at the time of its creation.

7. A method of managing an embedded system according to claim 6, **characterized in that** it further comprises a step of decrypting said component.

8. A method of managing an embedded system according to claim 1, wherein said component is replaced by another component fulfilling the same function.

9. A method of managing an embedded system according to claim 1, **characterized in that** said component is placed, upon execution, in a memory zone of the embedded system, said memory zone being designated an execution memory zone, said execution memory zone being different to the memory zone in which it the component was originally located.

10. A method for managing an embedded system according to claim 9, **characterized in that** said execution memory zone is accessible by said processor and possesses specific properties in relation to speed of execution, consumption, accessibility, or in relation to access rights.

11. A method for managing an embedded system according to claim 1, **characterized in that** the unimplemented target function identifiers make up the parameters of the PLUG routing function.

12. A method for managing an embedded system according to claim 1, **characterized in that** it comprises no copying operation for the parameters of the unimplemented target functions.

13. A method for managing an embedded system according to claim 1, **characterized in that** the unimplemented function identifier is stored in a stack of the processor before calling the PLUG routing function, the identifier thus stored then being used by said routing function to carry out the command to redirect to the function corresponding to said identifier.

14. A method for managing an embedded system according to claim 1, **characterized in that** the unimplemented function identifier is stored in a register of the processor before calling the PLUG routing function, the identifier thus stored then being used by said routing function to carry out the command to redirect to the function corresponding to said identifier.

15. A method for managing an onboard system according to claim 1, **characterized in that** the target functions are implemented on another processor of the embedded equipment.

16. A method of managing an embedded system according to claim 1, **characterized in that** the target functions are implemented on another computer resource, other than said embedded system.

17. A method of managing an embedded system according to claim 1, **characterized in that** said target function identifiers include a first information corresponding to the software component implementing said target function, and a second information corresponding to the target function number within said component.

18. A method of managing an embedded system according to claim 1, **characterized in that** the PLUG routing function is performed from at least one correspondence table of the target function identifier and the target function address.

19. A method of managing an embedded system according to claims 17 or 18, **characterized in that** said correspondence table is subdivided into a first correspondence table of said information corresponding to the software component and the component implementing said target function, and, for each of said components, a second correspondence table of said function number and the target function address in the corresponding component.

20. A method of managing an embedded system according to claim 19, **characterized in that** said second tables are created during the creation of the component.

21. A method of managing managing an embedded system according to claim 19, **characterized in that** said second tables are stored in read-only memory.

22. A method of managing an embedded system according to claim 19, **characterized in that** said first table is stored in RAM.

23. A method of managing an embedded system according to claim 1, **characterized in that** said component includes at least one information for specifying the functions performed by said component.

24. A method of managing an embedded system according to claim 23, **characterized in that** said information is the name of said component.

25. A method of managing an embedded system according to claim 23, **characterized in that** said information is the version number of said component.

26. A method of managing an embedded system according to claim 23, **characterized in that** said information is the list of functions implemented by said component.

27. A method of managing an embedded system according to claim 23, **characterized in that** the embedded system is capable of providing the list of available components on said embedded system as well the associated component information to another computing resource having made the request beforehand.

28. An embedded engine comprising:
at least one original code associated with computer equipment,
at least one embedded code associated with the embedded engine,
at least one processor associated with the embedded engine,
**characterized in that** it carries out the steps of the method according to claim 1.

29. An embedded system comprising:
the engine according to claim 28,
at least one original code associated with computer equipment,
at least one embedded code associated with said system;
at least one processor associated with the system.

30. A non-embedded system simulating an embedded system comprising:
the embedded engine according to claim 28,
at least one original code associated with computer equipment,
at least one embedded code associated with said non-embedded system;
at least one processor associated with the non-embedded system.
